# EUROPÄISCHE PATENTSCHRIFT

(11) **EP 3 629 567 B1**
(45) Veröffentlichungstag und Bekanntmachung des Hinweises auf die Patenterteilung: **27.11.2024**
(21) Anmeldenummer: 18196578.1
(22) Anmeldetag: 25.09.2018
(51) Int. Cl.: H04M 3/436, H04L 65/1076, H04M 3/42

(54) **VERFAHREN ZUR AUTOMATISIERTEN UNTERDRÜCKUNG VON SPAM-TELEFONANRUFEN**
METHOD FOR AUTOMATED SUPPRESSION OF SPAM TELEPHONE CALLS
PROCÉDÉ DE SUPPRESSION AUTOMATISÉE DES APPELS TÉLÉPHONIQUES POURRIELS

(43) Veröffentlichungstag der Anmeldung: 01.04.2020
(73) Patentinhaber: Deutsche Telekom AG, 53113 Bonn (DE)
(72) Erfinder: Quade, Michael, 53340 Meckenheim (DE)
(74) Vertreter: Braun-Dullaeus Pannen Emmerling Patent- & Rechtsanwaltspartnerschaft mbB

(56) Entgegenhaltungen:
- EP-B1- 2 332 311
- CA-A1- 3 195 323
- DE-A1- 102006 023 759
- JP-A- 2008 118 409
- US-A1- 2009 106 318
- US-A1- 2016 337 495
- US-A1- 2017 163 803

## Beschreibung

Die vorliegende Erfindung betrifft ein Verfahren sowie ein System auf dem technischen Gebiet der automatisierten Unterdrückung von unerwünschten Telefonanrufen, sogenannter Spam-Telefonanrufe.

Der Begriff "Spamming" bezeichnet die massenhafte Versendung unerwünschter Nachrichten ("Spam"). Begünstigt wird "Spamming" durch den einfachen und günstigen Zugang zu elektronischen Medien, die in der Regel bei geringem Zeitund Kostenaufwand den Versand von Nachrichten an eine große Zahl von Empfängern ermöglichen. Der Inhalt derartiger "Spam"-Nachrichten ist häufig kommerzieller oder auch krimineller Art. Bei Spam-Nachrichten mit kriminellem Inhalt können beispielsweise Viren versendet oder Nutzer aufgefordert werden ihre Kontodaten in Internetformulare einzugeben, welche dann von Verbrechern abgegriffen werden, um die Nutzer zu schädigen. Eine sehr bekannte Form des Spams ist der massenhafte Versand von E-Mails. Neben E-Mail-Spam existieren weitere Formen, wie zum Beispiel Spam bezüglich Instant Messaging, Newsgroups, Internet-Suchmaschinen, Weblogs oder Mobilfunk.

Aufgrund der vorherrschenden Bedeutung des E-Mail-Spams wurden vor allem in diesem Bereich technische Abwehrmaßnahmen, so genannte Spamfilter entwickelt, um Nutzer effektiv vor solchen E-Mails zu schützen. Hierbei wird beispielsweise die sogenannte Blacklist-Methode verwendet, die den Inhalt der E-Mail nach bestimmten Ausdrücken bzw. Stichworten oder den Absender auf Einträge aus einer Negativliste (Blacklist) untersucht. Ist ein solcher Ausdruck bzw. ein Absender gefunden, wird die E-Mail aussortiert. Allerdings lassen sich solche Filter oft leicht umgehen, indem die Stichwörter leicht abgeändert werden. Eine Erstellung entsprechender Filtermuster kann sehr aufwendig sein. Eine weitere Möglichkeit Spam-E-Mails zu filtern ist die sogenannte Bayes-Klassifikator-Methode, die auf einem selbstlernenden Bayes-Spamfilter aufgrund der bayesschen Wahrscheinlichkeit passiert. Ein Benutzer bzw. ein Systemadministrator muss etwa die ersten 1000 E-Mails manuell als Spam oder nicht-Spam klassifizieren. Danach erkennt das System fast selbstständig mit einer Trefferquote von meistens über 95 % die Spam-E-Mails.

Es ist nunmehr zur befürchten, dass sich die Problematik des Spams in nächster Zeit auch vermehrt in Richtung von unerwünschten Telefonanrufen verlagert wird. Bisher hat sich der Spam in diesem Bereich noch in Grenzen gehalten, da zum einen zumeist jeder Telefonanruf mit Anrufkosten verbunden war, welche sich bei einer Vielzahl von Anrufen zu einer bedeuteten Summe addieren können. Zum anderen war für jeden unerwünschten Telefonanruf eine Person notwendig, die den Anruf getätigt hat. Das Unkostenverhältnis war für unerwünschte Telefonanrufe also deutlich ungünstiger als beispielsweise für unerwünschte E-Mails.

Dies könnte sich allerdings nunmehr ändern, da auf Seiten der Anrufkosten mittlerweile viele Flatrate-Tarife verfügbar sind, die dem Anrufer keine zusätzlichen Kosten verursachen. Zum anderen gibt es mittlerweile intelligente sprachbasierte Systeme, die echte Personen am Telefon verblüffend echt nachahmen können, sodass es für den der angerufen wird, nicht sofort ersichtlich ist, dass er mit einer Maschine reden, wobei sich die Entwicklung in dieser Richtung noch weiter fortsetzen wird. Dies ermöglicht nun aber, dass unerwünschte Telefonanrufe auch in großer Menge effektiv getätigt werden können, ohne dass hierbei große Kosten entstehen. Es bleibt also zu befürchten, dass Nutzer in der Zukunft in großem Maße von solchen unerwünschten Telefonanrufen belästigt werden.

EP 1 628 448 B1 beschreibt ein Spam-Filtersystem für ein drahtloses Netzwerk das es ermöglicht Spam zu filtern, der für ein Mobilfunkgerät in der Form einer SMS vorgesehen ist. Hierbei wird die SMS, ähnlich einer herkömmlichen E-Mail, mittels eines Spam-Filtersystems analysiert. Nachteilig ist das Verfahren nicht geeignet, um Telefonanrufe bezüglich ihrer Spameigenschaften zu analysieren und den Nutzer zu schützen.

Die US 2017/163803 A1 beschreibt Methoden, Systeme und computerlesbare Medien für die Verwaltung von belästigenden Anrufen. In einem Beispiel umfasst ein Verfahren das Empfangen an einem Telekommunikationssignalisierungscomputersystem zum Weiterleiten von Telekommunikationssignalisierungsnachrichten in einem Kernnetzwerk eines Telekommunikationssignalisierungsnetzwerks einer Nachricht an ein Benutzergerät (UE) eines Teilnehmers, die angibt, dass der Teilnehmer einen ersten Anruf als einen Spam Anruf gekennzeichnet hat. Das Verfahren umfasst das Blockieren des zweiten Anrufs am Telekommunikationssignalisierungs-Computersystem.

EP 2 332 311 B1 beschreibt ein PUCI-System umfassend ein Benutzergerät (UE) und einen PUCI-Anwendungsserver, der Benutzerrichtlinien in Verbindung mit einem Heimteilnehmer-Server (HSS) enthält, der Betreiberrichtlinien enthält. Ein Richtlinienmanager stellt die Korrelation zwischen den Benutzerrichtlinien und den Betreiberrichtlinien her und bestimmt so, ob ein ankommender Anruf, der von einem vertrauenswürdigen/vertrauensunwürdigen Quellennetz stammt, in Übereinstimmung mit vorgeschriebenen Regeln/Logiken abgelehnt oder weitergeleitet werden soll.

US 2009/106318 A1 beschreibt ein Verfahren und System zur Erkennung von Spam über Internet-Telefonie (SPIT) wird offengelegt. Eingehende Anrufanfragen werden empfangen und mit Hilfe heuristischer Algorithmen analysiert. Auf der Grundlage der Analyse mit Hilfe der heuristischen Algorithmen wird eine Laufzeitaktion durchgeführt. Zu den heuristischen Algorithmen gehören heuristische Zero-Touch-Algorithmen, die kein menschliches Eingreifen erfordern, heuristische One-Touch-Algorithmen, die einmaliges menschliches Eingreifen erfordern, und heuristische Multi-Touch-Algorithmen, die mehr als einmaliges menschliches Eingreifen erfordern. Die kumulative Wahrscheinlichkeit wird für jede eingehende Anrufanfrage berechnet, und die eingehende Anrufanfrage wird als Spam eingestuft, wenn die kumulative Wahrscheinlichkeit einen Schwellenwert überschreitet.

Die DE 10 2006 023 759 A1 betrifft ein Verfahren zur Abwehr von über ein Internet-Protokoll-basierendes Netz übertragenen unerwünschten Telefonanrufen, mit den folgenden Schritten: a) Analyse und Überprüfen eines für einen Teilnehmeranschluss eingehenden Telefonanrufes durch eine automatisierte Detektoreinrichtung anhand voreingestellter Kriterien zum Durchschalten des Telefonanrufes (S1); b) Einordnen des eingehenden Telefonanrufes in eine Gruppe i) unerwünschter Telefonanrufe oder in eine Gruppe ii) erwünschter Telefonanrufe auf der Basis der in Schritt a) vorgenommenen Überprüfung (S2) und c) unterschiedliche Weiterbehandlung des eingehenden Telefonanrufes abhängig von der in Schritt b) vorgenommenen Einordnung (S3-S6).

Es ist also Aufgabe der Erfindung ein Verfahren sowie ein System zur automatisierten Identifizierung und Abwehr von unerwünschten Telefonanrufen anzugeben.

Diese Aufgabe wird gelöst mit den unabhängigen Ansprüchen 1 und 10.

Erfindungsgemäß ist ein Verfahren zur automatisierten Identifizierung und Abwehr von unerwünschten Telefonanrufen angegeben, welches folgende Schritte umfasst:
Wird ein Nutzer angerufen, welcher nachfolgend auch als Anzurufender bezeichnet wird, so wird der Telefonanschluss des Anrufenden, welcher nachfolgend im Fall eines unerwünschten Anrufs auch als Spammer bezeichnet wird, durch die Telefonzentrale registriert, wenn dieser den Anruf tätigt.

Bevor der Anruf an den Nutzer durchgestellt wird, startet ein der Telefonzentrale zugeordneter Algorithmus, der auf eine Datenbank zugreift die Informationen, insbesondere Spam-Identifizierungsdaten, über Telefonanschlüsse aufweist. Der Algorithmus analysiert mit Hilfe der in der Datenbank hinterlegten Information den Telefonanschluss des Anrufenden im Hinblick auf einen möglichen unerwünschten Anruf und markiert diesen bei Überschreiten eines Schwellenwertes als unerwünschten Anruf.

Wird der Telefonanruf als unerwünschter Anruf markiert, liegt also ein Spam-Anruf vor, so werden seitens der Telefonzentrale technische Abwehrmaßnahmen initiiert, wobei die Abwehrmaßnahmen den Nutzer vor dem unerwünschten Anruf schützen.

Durch die Erfindung wird also ein effektiver Schutz des Nutzers vor Spam-Anrufen geschaffen. Diese werden schon im Vorfeld durch die Telefonzentrale herausgefiltert und der Nutzer wird nicht in der bislang herkömmlichen Weise dadurch belästigt, dass er zuerst den Anruf annehmen muss, um gegebenenfalls erkennen zu können, dass es sich um einen Spam-Anruf handelt. Zudem kann der Gefahr vorgebeugt werden, dass der Nutzer, insbesondere ältere Nutzer, nicht erkennen, dass es sich um einen Spam-Anruf handelt. Hierdurch kann in vorteilhafter Weise verhindert werden, dass diese Nutzer ausspioniert werden und gegebenenfalls sicherheitsrelevante Daten, wie etwa die ihres Kontos preisgeben. Auch unerwünschte Werbeanrufe können auf diese Art und Weise schon vor der Durchstellung des Anrufs ausgefiltert werden.

Bevorzugt wird eine trainierte Datenbank oder eine trainierte Maschine mit Learning-Algorithmus verwendet, die im Vorfeld erzeugt werden kann und deren Spam-Identifizierungsdaten Informationen von getätigten Telefonanrufen von Telefonanschlüssen eines Anrufenden sind, die bezüglich unerwünschter Anrufe auswertbar sind. Die Datenbank umfasst dann also die Informationen darüber, "wer" Anrufe getätigt hat und "wie" diese durchgeführt wurden. Als Spam-Identifizierungsdaten werden im Rahmen dieser Erfindung solche Daten bezeichnet, deren Auswertung Hinweise darauf liefern kann, ob der Anruf ein so genannter Spam-Anruf ist. Die so trainierte Datenbank wird zweckmäßig in einer Telefonzentrale hinterlegt.

Vorzugsweise kann der Nutzer als Kunde den Dienst der technischen Abwehrmaßnahmen aktivieren oder deaktivieren. Dies kann beispielsweise dadurch realisiert werden, dass der Nutzer entsprechende Kontrollhäkchen auf einer der Telefonzentrale zugeordneten Onlineplattform anklickt oder einen Mitarbeiter der Telefonzentrale bzw. des Telefondienstes entsprechend anweist. Somit kann sichergestellt werden, dass alle Anrufe zu dem Nutzer durchgestellt werden, wen er dies wünscht. Dies ermöglicht dem Nutzer beispielsweise diese Option ganz bewusst zu wählen, wenn er beispielsweise in nächster Zeit mit einem für ihn sehr wichtigen Anruf rechnet, der auf jeden Fall zu ihm durchgestellt werden soll.

Technische Abwehrmaßnahmen, die im Rahmen dieser Erfindung im Fall des unerwünschten Anrufs Anwendung finden können sind beispielsweise eine Warnansage von der Telefonzentrale an den Nutzer bevor der Anruf durchgestellt wird. In dieser Warnansage können dem Nutzer weitere Informationen über den Anruf mitgeteilt werden, sodass der Nutzer entscheiden kann, ob der Anruf durchgestellt werden soll oder nicht. Eine Warnansage erhöht auf jeden Fall die Aufmerksamkeit des Nutzers und macht ihn sensitiver bezüglich des möglichen Spam-Anrufs. Als Abwehrmaßnahme kann auch vorgesehen sein, dass sich der Anrufer bei der Telefonzentrale als Mensch identifizieren muss. Diese Identifizierung sollte so angepasst werden, dass künstliche Intelligenzen entdeckt werden können. Unter Umständen bedeutet das, dass die entsprechenden Algorithmen regelmäßig aktualisiert werden müssen. Dies kann auch automatisiert geschehen, indem die Telefonzentrale dem Anrufer "Aufgaben" stellt, die beispielsweise für einen Telefonroboter nur schwer zu beantworten sind. Scheitert die Identifizierung, wird der Anruf nicht zu dem Nutzer durchgestellt und dieser in vorteilhafter Weise gar nicht belästigt. Der Anrufer kann zudem an ein Call-Center weitergeleitet werden, welches eine Prüfung des Anrufenden vornehmen kann. Zudem kann der Anruf gesperrt oder in eine Spam-Sprachbox umgeleitet werden. In der "normalen" SPRACHBOX können die erkannten SPAM Sprachnachrichten auch in einen "SPAMORDNER" verschoben werden oder als SPAM markiert werden. Diese Abwehrmaßnahmen werden eingeleitet, wie schon vorstehend erwähnt, wenn der Schwellenwert überschritten ist, der den Anruf als unerwünschten Anruf markiert. Dieser Schwellenwert bezeichnet die Wahrscheinlichkeit, dass ein Anruf ein Spam-Anruf ist und wird mittels des Algorithmus berechnet. Der Schwellenwert kann, auch auf Wünsche des Nutzers, veränderlich festgelegt werden, sodass die technischen Abwehrmaßnahmen mehr oder weniger stark sensitiv filternd eingreifen.

In einer bevorzugten Ausgestaltung der Erfindung wird die trainierte Datenbank automatisiert in Echtzeit mittels des Algorithmus aktualisiert. Hierdurch wird vorteilhaft ermöglicht, dass neue unerwünschte Rufnummern erkannt und in die Datenbank eingepflegt werden, sodass der Schutz der Nutzer dynamisch angepasst und aktualisiert wird. Ein User-Feedback kann hierbei zum Trainieren eines lokalen und/oder eines globalen Datensatzes genutzt werden, der dann wieder Teil des gesamten Datensatzes sein kann auf dem der Machine-Learning Algorithmus trainiert wird.

In einer vorteilhaften Ausgestaltung der Erfindung umfassen die Spam-Identifizierungsdaten eine Anzahl der Anrufe von Telefonanschlüssen in einer definierten Zeiteinheit an andere Rufnummern. Hierdurch kann ermittelt werden, wie oft ein bestimmter Telefonanschluss andere Rufnummern angewählt hat. Wird beispielsweise festgestellt, dass dieser Telefonanschluss am Tag mehrere 100 Anrufe tätigt, ist dies ein Hinweis auf einen Spam-Anruf (wobei die Zahlen nur exemplarischen Charakter haben und der jeweiligen Situation angepasst werden sollen). Es kann zudem die Dauer von Telefongesprächen der Telefonanschlüsse ermittelt werden. Je kürzer diese Dauer ist, desto höher ist die Wahrscheinlichkeit, dass es sich um einen Spam-Anruf handelt. Auch die Information, ob der Nutzer oder der Anrufer aufgelegt hat, kann ein Hinweis auf Spam-Anrufe sein. Legt zumeist der angerufene Nutzer auf, deutet dies auf einen Spam-Anruf hin. Weiter können die Spam-Identifizierungsdaten umfassen, aus welchem Land der Anruf erfolgt, wobei jedem Land eine gewisse Wahrscheinlichkeit für einen Spam-Anruf zugeordnet werden kann. Ferner kann erfasst werden, ob der Anrufer mit einer unterdrückten Rufnummer angerufen hat, was ebenfalls die Wahrscheinlichkeit für einen Spam-Anruf erhöht.

In einer bevorzugten Ausgestaltung der Erfindung basiert der die Datenbank trainierende Algorithmus auf mathematischen Modellen eines Entscheidungsbaums, eines Forrest Trees oder eines neuronalen Netzes. Insbesondere neuronale Netze haben sich beim Trainieren von Datenbanken als überaus flexibel und effektiv herausgestellt. In einer besonders vorteilhaften Ausprägung der Erfindung wird ein tiefes neuronales Netz verwendet, das in seinem Aufbau auf die gestellte Aufgabe optimal angepasst werden kann.

Erfindungsgemäß wird die Datenbank automatisiert mit Informationen aus dem Internet angereichert.

Der Algorithmus durchsucht regelmäßig Internetforen nach Schlagwörtern, welche über Spam-Anrufe berichten. Entsprechend verdächtige Telefonnummern werden extrahiert und in die Datenbank aufgenommen. Solche extrahierte Telefonnummern gelten im Rahmen der Erfindung dann quasi als "vorbelastet".

Das Verfahren kann zudem vorzugsweise ermöglichen, dass sich ein Inhaber eines Telefonanschlusses beispielsweis bei der Telefonzentrale oder einer Behörde als "Nicht-Spammers" identifiziert, und dass ein Telefonanruf des "Nicht-Spammers" nicht als unerwünschter Anruf markiert wird. Auf diese Weise kann vorteilhaft erreicht werden, dass beispielsweise Telefonanschlüsse, die Kundendiensten zugeordnet sind, gezielt nicht als unerwünschte Anrufe gelten, auch wenn diese andernfalls die Kriterien zur Markierung als Spam-Telefonanruf erfüllen würden. Beispielsweise werden aus einem Kundencenter sehr häufig viele unterschiedliche Nummern angerufen, was der Algorithmus bei anderen Telefonanschlüssen, die nicht explizit in der Datenbank der Telefonzentrale als "Nicht-Spammer" hinterlegt sind, als potentiell verdächtig ansehen würde.

In einer bevorzugten Ausgestaltung kann der Algorithmus markierte Telefonnummern nach bestimmten Kriterien wieder demarkieren, sodass die Anrufe wieder durchgestellt werden. Ein mögliches solches Kriterium ist die Zeit: Wird ein Telefonanschluss nämlich einmal als Spam markiert, wäre die entsprechende Telefonnummer quasi für alle Zeiten von der Telefonzentrale blockiert. Nach einer gewissen Zeit, kann es nun aber vorkommen, dass die Telefonnummer den Inhaber wechselt und der neue Inhaber kein Spammer ist. Seine Anrufe würden dann aber trotzdem ihr Ziel nicht erreichen. Wird nun aber beispielsweise der Telefonanschluss nach einer festgelegten Zeit, zumindest testweise, wieder demarkiert, ist diese Telefonnummer wieder ganz normal zu gebrauchen. Zumal nicht davon auszugehen ist, dass ein Spammer einen bestimmten Anschluss noch lange Zeit verwendet, nachdem er feststellt, dass sein Telefonanschluss auf einer Spam-Liste steht. Es könnte sinnvoll sein, die Telefonnummer beispielsweise nach einem Monat wieder zu demarkieren. Wird diese dann immer noch als Spam-Telefonnummer verwendet, ist dies auch kein großes Problem, da der Algorithmus diese bereits nach kurzer Zeit wieder in die Spam-Liste hinzufügt und als unerwünschten Telefonanruf markiert.

Gemäß einem weiteren Aspekt der Erfindung ist ein System angegeben, welches zur Durchführung des vorstehend beschriebenen Verfahrens geeignet ist.

Im Folgenden werden bevorzugte Ausführungsbeispiele der vorliegenden Erfindung unter Bezugnahme auf die begleitende Figur erläutert:

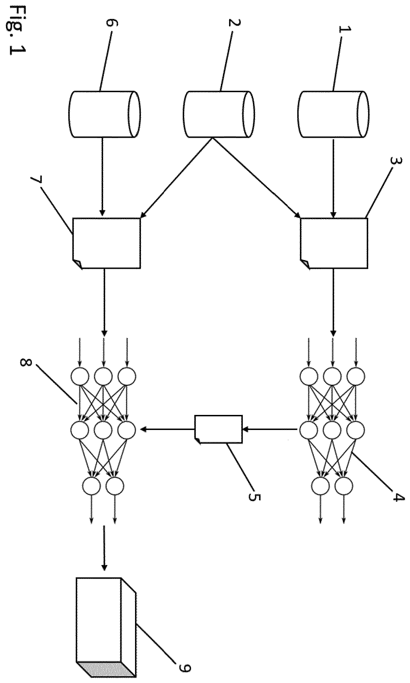

- Fig. 1:: zeigt das erfindungsgemäße Verfahren zur Unterdrückung von Spamangerufen.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Fig. 1 zeigt eine Erfassung der Roh-Daten der Telefonanrufe 1, welche zusammen mit Daten aus anderen Datenquellen 2, einschließend aus dem Internet, zu einer Roh-Datenbank 3 zusammengefasst werden. Zunächst liegt der Fokus also auf dem Sammeln von auswertbaren Daten, wobei die Roh-Datenbank 3 als Informationen unter anderem Spam-Identifizierungsdaten aufweist. In einem nächsten Schritt wird eine Machine-Learning-Methode verwendet (z.B. neuronales Netz, Entscheidungsbaum, etc.), um als Output eine trainierte Datenbank 5 zu erhalten. Das Ergebnis der trainierten Datenbank 5 kann verifiziert werden, um die Qualität der Vorhersage abzuschätzen und gegebenenfalls Korrekturen vornehmen zu können. Auf Basis der trainierten Datenbank 5 ist ein selbstlernender Algorithmus in einer Telefonzentrale in der Lage, einen Telefonanruf als Spam-Anruf zu erkennen und geeignete technische Abwehrmaßnahmen einzuleiten. Dies wird dadurch realisiert, dass die trainierte Datenbank dem Algorithmus 8 als Input übergeben wird. Dieser kann dann bei einem eingehenden Anruf auf Grundlage des trainierten Modells quasi in Echtzeit eine Vorhersage über die Spam-Wahrscheinlichkeit treffen. In der Folge kann der Algorithmus eine Rufnummer Blacklist mit verschiedenen Stufen generieren. Beispiele für diese Stufen sind das Blockieren von Anrufen, das Umleiten in Call-Center, Warnungen und/oder die Notwendigkeit, dass sich der Anrufer als Mensch identifiziert.

Indem beständig weitere Rohdaten von Telefonanrufen 6 erfasst und in eine weitere oder dieselbe Roh-Datenbank 7 eingepflegt werden, kann das System im laufenden Betrieb aktualisiert werden und neue Spam-Anrufe erkennen. Die Ergebnisse des erfindungsgemäßen Verfahrens werden auf das Telefonie Backbone 9 (IMS, TAS, Call Handling) angewendet.

Im Folgenden soll nun noch näher auf die Informationen eingegangen werden, die aus den Anrufen extrahiert und als Spam-Identifizierungsdaten verwendet werden können. Mit diesen Spam-Identifizierungsdaten werden die Datenbanken angereichert, sodass der Algorithmus in der Lage ist Entscheidungen zu treffen. Eine Telefonnummer bzw. ein Telefonanschluss ruft mehr als n-mal pro Tag unterschiedliche Zielrufnummern an und legt innerhalb einer Zeit t auf: Je höher die Zahl n und je kürzer die Zeit t ist, desto höher ist die Wahrscheinlichkeit, dass es sich um einen Spam-Anruf handelt.

Eine Telefonnummer ruft nur Hauptrufnummern an: Da die Hauptrufnummern leichter automatisiert zu extrahieren sind als die Durchwahlnummern, deutet auch dies auf eine erhöhte Spam-Wahrscheinlichkeit hin.

Eine Telefonnummer ruft aus dem Ausland an: Hier besteht vor allem die Möglichkeit, Anrufe aus bestimmten Ländern mit einer erhöhten Spam-Wahrscheinlichkeit zu kennzeichnen.

Der Anteil unterschiedliche Rufnummern an der Gesamtmenge der angerufenen Rufnummern kann analysiert werden. Je größer dieser Anteil ist, umso höher ist die Wahrscheinlichkeit eines Spam-Anrufs.

Die Dauer der Gespräche: Je kürzer die Dauer der Gespräche ist, desto höher ist die Wahrscheinlichkeit eines Spam-Anrufs.

Es kann extrahiert werden, nach welcher Zeit der Angerufene auflegt: Je kürzer diese Zeit ist, desto höher ist die Wahrscheinlichkeit eines Spam-Anrufs.

Ein starker Anstieg der Telefonanrufe eines Telefonanschlusses bzw. einer Telefonnummer in einem zeitlichen Intervall kann auch eine erhöhte Spam-Wahrscheinlichkeit indizieren.

Die tageszeitliche Varianz der Anrufe kann auch einen Hinweis auf die Spam-Wahrscheinlichkeit geben. Es ist zu erwarten, dass die Spam-Anrufe gleichmäßiger über den Tagesverlauf verteilt sind als herkömmliche Anrufe.

Weitere Daten, welche als Spam-Identifizierungsdaten verwendet werden können sind beispielsweise der Anteil der Ziel-Hauptrufnummern an der Gesamtzahl der Anrufe, der Anteil der TOP 5 oder TOP 10 Zielrufnummernanrufe an der Gesamtzahl der Anrufe, die Verteilung der nicht erfolgreichen SIP-Codes, die Nutzung der Sprachbox Funktionalität (wenn der Angerufene den Anruf nicht manuell abgenommen hat), die Dauer der Anrufe auf der Sprach-Box, den Delay der VoIP Sprachverbindung in Richtung des Angerufenen und des Anrufenden, eine Abweichung von "User provided Number zu Network provided Number" (der Anrufer sendet eine andere Telefonummer), die Rufnummer des Anrufenden ist unterdrückt, der Übergangspunkt der Sprachverbindung in das Netz des Providers, die Anzahl nicht erfolgter Anrufe zu dem gewählten Anschluss und/oder der Anrufer ruft nicht vom nationalen Mobilfunk an.

Je nach Bedarf können all diese Informationen entweder einzelnen oder miteinander kombiniert verwendet werden, um eine möglichst optimal angepasste bzw. angereicherte Datenbank zu erzeugen.

Als eine weitere Datenquelle dienen verifizierte Spam- oder Abuse-Anrufe. Wie schon vorstehend erwähnt, kann eine Quelle dieser Liste Internetportale bzgl. Spam-Anrufe sein, aber auch offizielle Stellen oder interne Datenbanken der Netzbetreiber. Zudem können Kunden, die an dem Verfahren teilnehmen, über verschiedene Kanäle Spam oder Abuse-Anrufe direkt melden.

Bei der Aufarbeitung der Roh-Datenbank 3, sodass Machine-Learning-Methoden angewendet werden können, ist es aus statistischen Gründen von Vorteil, wenn Datensätze, die Spam-Anrufe aufweisen und solche Datensätze, die keine Spam-Anrufe aufweisen etwa gleichverteilt ausgestaltet sind.

Das erfindungsgemäße Verfahren wird, wie schon vorstehend erläutert, in das Telefonie-Backbone 9, also beispielsweise die Telefonzentrale, eines Telefondienstleisters integriert und kann nun verwendet werden, um den Nutzer effektiv vor Spam-Anrufen zu schützen. Zu jedem eingehenden Telefonanruf wird dann die Wahrscheinlichkeit ermittelt, dass es sich um einen Spam-Anruf handelt. Hierbei werden (quasi) echtzeitfähige BigData Systeme wie etwa Hadoop-SPARK eingesetzt. Die eingehenden Telefonanrufe können dann nach einem gestuften Verfahren behandelt werden:
1. Der Telefonanruf wird als unbedenklich eingestuft und normal durchgestellt.
2. Es erfolgt eine Warnansage an den Angerufenen vor oder nach dem Rufaufbau.
3. Der Anrufer muss sich als Mensch identifizieren.
4. Es erfolgt eine Weiterleitung in ein Call-Center, um den Anrufenden zu identifizieren. Wird dieser als Nicht-Spammer erkannt, erfolgt ein normaler Rufaufbau.
5. Sperrung des Telefonanrufs oder Umleitung in eine Spam-Sprachbox.

Selbstverständlich steht es dem Nutzer bzw. dem Kunden frei an dem Verfahren teilzunehmen oder er kann dies jederzeit widerrufen. Gegebenenfalls muss der Kunde eine entsprechende Gebühr entrichten. Auf ähnliche Art kann eine intelligente Voice Mobilbox funktionieren, die automatisch Spam-Anrufe in einen Spam-Ordner legt oder löscht.

Es besteht für Anschlussinhaber die Möglichkeit, sich bei dem Telefondienst als Nicht-Spammer zu identifizieren. Weiterhin können neuronale Netze oder selbstlernende Systeme auf identifizierte Spammer trainiert werden und weitere Spammer werden dann durch diese Systeme erkannt, ohne dass ein Modell wie vorstehend beschrieben entwickelt werden muss.

Der Kunde bzw. der Nutzer bekommt in von ihm wählbaren Zeitabständen eine Liste der Spam-Anrufe zugesendet und kann entscheiden, ob es sich wirklich um Spam-Anrufe gehandelt hat oder nicht. Dieses Ergebnis fließt wiederum in die Modelle zur Berechnung der Spam Wahrscheinlichkeit ein. Dem Kunden wird ein Internetportal zur Verfügung gestellt, in welchem er Einstellungen zu diesem Service vornehmen kann. Der Kunde kann dann Telefonnummern blocken, abgeblockt Telefonnummern entsperren, Sicherheitslevel ändern, seine Spam-VoiceBox abhören und/oder Anrufe in der Spam-VoiceBox als Spam markieren.

Es versteht sich, dass die Erfindung nicht auf herkömmliche Telefonie begrenzt ist, sondern beispielsweise auch die Videotelefonie umfasst, bei welcher Spam-Anrufe analog wie vorstehend beschrieben ermittelt werden können.

## Patentansprüche

1. Verfahren zur automatisierten Identifizierung und Abwehr von unerwünschten Telefonanrufen umfassend folgende Schritte:
• Registrierung eines Telefonanschlusses eines Anrufenden an einen Anzurufenden durch eine Telefonzentrale bei einem Anruf,
• Starten eines Algorithmus in der Telefonzentrale vor einer Durchstellung des Anrufs an den Anzurufenden,
- wobei der Algorithmus auf eine Datenbank der Telefonzentrale zugreift die Informationen, insbesondere Spam-Identifizierungsdaten, über Telefonanschlüsse aufweist,
- wobei der Algorithmus mit Hilfe der in der Datenbank hinterlegten Information den Telefonanschluss des Anrufenden im Hinblick auf einen möglichen unerwünschten Anruf analysiert und bei Überschreiten eines Schwellenwertes als unerwünschten Anruf markiert,
• Initiieren von technischen Abwehrmaßnahmen durch die Telefonzentrale, wenn der Anruf ein unerwünschter Anruf ist, wobei die Abwehrmaßnahmen den Anzurufenden vor dem unerwünschten Anruf schützen,
**dadurch gekennzeichnet,**
**dass** die Datenbank automatisiert mit Informationen aus dem Internet angereichert wird, wobei der Algorithmus regelmäßig Internetforen nach Schlagwörtern durchsucht, die über Spam-Anrufe berichten und verdächtige Telefonnummern extrahiert und in die Datenbank aufnimmt.

2. Verfahren nach Anspruch 1, **dadurch gekennzeichnet, dass** als Datenbank eine trainierte Datenbank verwendet wird, wobei deren Spam-Identifizierungsdaten Informationen von getätigten Telefonanrufen von Telefonanschlüssen von Anrufenden sind, die bezüglich unerwünschter Anrufe auswertbar sind.

3. Verfahren nach einem der vorherigen Ansprüche, **dadurch gekennzeichnet, dass** die trainierte Datenbank automatisiert in Echtzeit aktualisiert wird.

4. Verfahren nach einem der vorherigen Ansprüche, **dadurch gekennzeichnet, dass** der die Datenbank trainierende Algorithmus auf mathematischen Modellen eines Entscheidungsbaums, eines Forrest Trees oder eines neuronalen Netzes basiert und selbstlernend ist.

5. Verfahren nach einem der vorherigen Ansprüche, **dadurch gekennzeichnet, dass** sich ein Inhaber eines Telefonanschlusses als "Nicht-Spammer" identifizieren kann und dass ein Telefonanruf des "Nicht-Spammers" nicht als unerwünschter Anruf markiert wird.

6. Verfahren nach einem der vorherigen Ansprüche, **dadurch gekennzeichnet, dass** der Algorithmus als unerwünschte Anrufe markierte Telefonnummern nach bestimmten Kriterien wieder demarkiert.

7. Telefonzentrale mit einer Rechnereinheit, die zur Durchführung eines Verfahrens nach einem der Ansprüche 1 bis 6 geeignet ist.

## Claims

1. A method for the automated identification and rejection of unwanted telephone calls comprising the following steps:
• registering a telephone connection of a caller to a person to be called by a switchboard when a call is made,
• starting an algorithm in the switchboard before the call is put through to the person to be called,
- wherein the algorithm accesses a database of the switchboard which contains information about telephone connections, in particular spam identification data,
- wherein the algorithm uses the information stored in the database to analyse the caller's telephone connection regarding the possibility that it may be an unwanted call, and flags it as an unwanted call if a threshold value is exceeded,
• initiating technical countermeasures by the switchboard when the call is an unwanted call, wherein the countermeasures protect the person to be called from the unwanted call,
**characterized in that**
the database is automatically augmented with information from the internet, wherein the algorithm regularly searches internet forums for keywords that report on spam calls and extracts suspicious telephone numbers and includes them in the database.

2. The method according to Claim 1, **characterized in that** a trained database is used as the database, wherein the spam identification data contained therein is information from telephone calls made from telephone connections by callers which can be evaluated with regard to unwanted calls.

3. The method according to one of the preceding claims, **characterized in that** the trained database is automatically updated in real time.

4. The method according to one of the preceding claims, **characterized in that** the algorithm that trains the database is based on mathematical models of a decision tree, a forest tree, or a neural network, and is self-learning.

5. The method according to one of the preceding claims, **characterized in that** an owner of a telephone connection can identify himself as "non-spammer", and that a telephone call from the "non-spammer" is not flagged as an unwanted call.

6. The method according to one of the preceding claims, **characterized in that** the algorithm removes the flag from telephone numbers flagged as unwanted calls in accordance with certain criteria.

7. A telephone switchboard with a processor unit that is suitable for performing a method according to any one of Claims 1 to 6.

## Revendications

1. Procédé d'identification et de défense automatisée des appels téléphoniques indésirables comprenant les étapes suivantes consistant à :
• enregistrer une connexion téléphonique d'un appelant vers une personne à appeler par un central téléphonique lors d'un appel,
• démarrer un algorithme dans le central téléphonique avant le transfert de l'appel vers la personne appelée,
- dans lequel l'algorithme accédant à une base de données du central téléphonique contenant des informations, notamment des données d'identification de pourriel, via les connexions téléphoniques,
- dans lequel l'algorithme utilise les informations stockées dans la base de données pour analyser la ligne téléphonique de l'appelant en ce qui concerne un éventuel appel indésirable et, si une valeur seuil est dépassée, il le marque comme appel indésirable,
• déclencher des mesures techniques de défense par le central téléphonique si l'appel est un appel indésirable, dans lequel les mesures de défense protègent la personne appelée contre l'appel indésirable,
**caractérisé en ce que**
**que** la base de données est automatiquement enrichie d'informations provenant d'Internet, dans lequel l'algorithme recherche régulièrement sur les forums Internet des mots-clés, qui signalent les appels de pourriels, et extrait les numéros de téléphone suspects et les ajoute à la base de données.

2. Procédé selon la revendication 1, **caractérisé en ce que** comme base de données, une base de données entraînée est utilisée, dans lequel ses données d'identification de pourriels sont des informations provenant des appels téléphoniques passés par les connexions téléphoniques des appelants, qui peuvent être évalués par rapport aux appels indésirables.

3. Procédé selon une des revendications précédentes, **caractérisé en ce que** la base de données entraînée est automatiquement mise à jour en temps réel.

4. Procédé selon une des revendications précédentes, **caractérisé en ce que** l'algorithme d'entraînement de la base de données est basé sur des modèles mathématiques d'une arborescence de décision, d'une forêt d'arborescences ou d'un réseau neuronal de façon auto-adaptative.

5. Procédé selon une des revendications précédentes, **caractérisé en ce qu'**un propriétaire d'une connexion téléphonique peut s'identifier comme « non envoyeur de pourriel » et qu'un appel téléphonique du « non envoyeur de pourriel » n'est pas marqué comme appel indésirable.

6. Procédé selon une des revendications précédentes, **caractérisé en ce que** l'algorithme décoche les numéros de téléphone marqués comme appels indésirables à nouveau selon certains critères.

7. Central téléphonique comportant une unité informatique, qui convient pour mettre en œuvre le procédé selon une des revendications 1 à 6.
